# EUROPÄISCHE PATENTSCHRIFT

(11) **EP 3 546 117 B1**
(45) Veröffentlichungstag und Bekanntmachung des Hinweises auf die Patenterteilung: **26.07.2023**
(21) Anmeldenummer: 19163490.6
(22) Anmeldetag: 18.03.2019
(51) Int. Cl.: B23Q 1/00, B23Q 3/06

(54) **SPANNMODUL, INSBESONDERE NULLPUNKTSPANNMODUL**
CLAMPING UNIT IN PARTICULAR ZERO POINT CLAMPING UNIT
MODULE DE SERRAGE, EN PARTICULIER MODULE DE SERRAGE AU POINT ZÉRO

(30) Priorität: 29.03.2018 DE 102018107659
(43) Veröffentlichungstag der Anmeldung: 02.10.2019
(73) Patentinhaber: Heinz-Dieter Schunk GmbH & Co. Spanntechnik KG, 88512 Mengen (DE)
(72) Erfinder: Kleiner, Markus, 88605 Messkirch (DE); Schräder, Philipp, 88512 Mengen-Blochingen (DE)
(74) Vertreter: DREISS Patentanwälte PartG mbB

(56) Entgegenhaltungen:
- EP-A1- 3 275 588
- WO-A1-03/039807
- DE-U1- 9 107 470

## Beschreibung

Die Erfindung betrifft ein Spannmodul, und insbesondere ein Nullpunktspannmodul, mit einem Grundkörper, mit einer im oder am Grundkörper vorgesehenen Spannaufnahme zur Aufnahme eines Spannelements, mit im Grundkörper hin zu einer Mittelachse, also in radialer Richtung verlagerbaren Verriegelungskörpern, die in einer Verriegelungslage gegen das Spannelement derart wirken, dass das Spannelement oder ein am Spannelement anordenbares Trägerteil in axialer Richtung gegen den Grundkörper beaufschlagt wird, mit einem Treibkörper zum Betätigen der Verriegelungskörper und mit einem Antrieb zum Antreiben des Treibkörpers.

Solche Spannmodule sind beispielsweise aus der DE 10 2010 010 898 A1 bekannt. Bei diesem Stand der Technik ist der Treibkörper als Treibring ausgebildet, der über Stellkolben, welche zu deren Verlagerung mit Druckluft beaufschlagt werden können, um die Mittelachse verdreht werden kann. Über die Verdrehung des Treibkörpers wird letztlich die Verlagerung der als Spannschieber ausgebildeten Verriegelungskörper erreicht.

Die EP 3 275 588 A1 zeigt ebenfalls ein Spannsystem mit einem als Treibring ausgebildeten Treibkörper, wobei im Gehäuse ein Elektromotor zur Verdrehung des Treibrings vorgesehen ist.

Aus der EP 1 707 307 A1 ist ebenfalls ein derartiges Spannmodul bekannt. Dort ist der Treibkörper als axial betätigbarer Kolben mit daran angeordneten Stellgliedern ausgebildet, der einen Druckraum begrenzt. Bei Beaufschlagung des Druckraums mit Druckluft wird der Kolben in axialer Richtung verlagert, wodurch über die Stellglieder die Verriegelungskörper in radialer Richtung verlagert werden.

Aus der WO 03/039807 A1 ist ein Spannmodul nach dem Oberbegriff des Anspruchs 1 bekannt, wobei der Treibkörper als Keilschieber ausgebildet ist. Zum Betätigen der Verriegelungskörper kann der Keilschieber durch Schrauben in der Bohrung verlagert werden, wobei zwei weitere Schieber verdrängt werden, welcher wiederum die Verriegelungskörper betätigen.

Als Verriegelungskörper können nicht nur Spannschieber, sondern auch beispielsweise Verriegelungskugeln zum Einsatz kommen.

Die am oder im Spannmodul verriegelbaren Spannelemente können beispielsweise als Spannbolzen oder als Spannring ausgebildet und beispielsweise an einem zu bearbeitenden Werkstück oder einem Werkstückträger vorgesehen sein. Das jeweilige Spannelement wird zum positionsgenauen Spannen und/oder zum Bearbeiten an dem Spannmodul verriegelt. Bei Nullpunktspannmodulen handelt es sich um Spannmodule, mit denen zu bearbeitende Werkstücke oder Werkstückträger wiederholbar positionsgenau gespannt werden können. Dabei ist denkbar, mehrere Spannmodule auf einem gemeinsamen Träger, beispielsweise auf einem Spanntisch oder einer Spannplatte, vorzusehen, um insbesondere auch größere Werkstücke mittels mehreren Spannelementen spannen zu können.

Die Spannaufnahme sowie die zugehörigen Spannelemente können dabei, um einen konzentrischen Einzug zu gewährleisten, konusflächige Angriffsabschnitte aufweisen, gegen welche die Spannmittel der Spannmodule wirken.

Dabei ist es wünschenswert, die Spannmodule auch in Umgebungen einsetzen zu können, in denen vergleichsweise hohe Temperaturen herrschen. Insbesondere bei generativen Fertigungsverfahren bzw. beim Additive Manufacturing (AM) werden aus formlosem oder formneutralen Material, insbesondere mittels physikalischer Prozesse, Gegenstände gefertigt. Bei diesen physikalischen Prozessen treten in der Regel hohe Temperaturen, die im Bereich von mehreren hundert Grad Celsius liegen können, auf. Es hat sich gezeigt, dass die bekannten Spannmodule derartigen Temperaturen nicht dauerhaft standhalten, insbesondere weil elektrische Bauteile und/oder Gummidichtungen unter diesen Temperaturen beschädigt werden können.

Der vorliegenden Erfindung liegt deshalb die Aufgabe zugrunde, ein Spannmodul bereitzustellen, mit dem Bauteile auch unter vergleichsweise hohen Temperaturen wiederholgenau gespannt werden können.

Diese Aufgabe wird gelöst durch ein Spannmodul mit den Merkmalen des Patentanspruchs 1. Ein derartiges Spannmodul sieht vor, dass der Antrieb vom Treibkörper beabstandet angeordnet und mit dem Treibkörper über ein Distanzglied bewegungsgekoppelt ist. Aufgrund der Erfindung wird folglich der Antrieb von der Spannmechanik örtlich separiert und thermisch entkoppelt. Der Antrieb, der in der Regel temperatursensitive Dichtungen und/oder elektronische Bauteile umfasst, kann folglich in einer Umgebung betrieben werden, bei der geringere Temperaturen herrschen, als im Fertigungsbereich, wo die Spannaufnahme zur Aufnahme des Spannelements vorgesehen ist. Der Antrieb mit den Dichtelementen und/oder elektronischen Bauteilen kann in einem Temperaturbereich betrieben werden, der für die entsprechenden Elemente und Bauteile nicht schädlich ist.

Ferner ist zwischen dem Antrieb und dem Treibkörper wenigstens ein Isolationskörper vorgesehen, wobei das Distanzglied den Isolationskörper durchgreift. Der Isolationskörper sieht vorteilhafterweise einen Durchbruch oder eine Bohrung vor, welche vom Distanzglied durchgegriffen wird. Zwischen dem Antrieb und der Spannmechanik ist der Isolationskörper vorgesehen, der für eine thermische Isolierung des Antriebs sorgt. Je nach im Fertigungsbereich herrschenden Temperaturen kann der Isolationskörper entsprechend stark ausgebildet sein. Je stärker der Isolationskörper ist, desto länger ist das Distanzglied auszubilden, welches durch den Isolationskörper hindurch ragt.

Das Distanzglied kann insbesondere als Stange ausgebildet sein. Eine Stange ist deshalb vorteilhaft, weil damit zum einen axiale Bewegungen in Längsrichtung der Stange und zum anderen Drehbewegungen um die Mittelachse der Stange herum ausgeführt werden können.

Das Distanzglied läuft vorzugsweise entlang der Mittelachse der Spannaufnahme. Dadurch kann das Spannmodul insgesamt vergleichsweise kompakt bauen. Dennoch können entsprechende Kräfte vom Antrieb auf den Treibkörper übertragen werden.

Um einen Wärmeübertrag hin zum Antrieb möglichst gering zu halten, ist denkbar, dass das Distanzglied hin zum Isolationskörper, zum Treibkörper und/oder zum Antrieb abgedichtet ist. Aufgrund der Abdichtung kann zum einen Strahlungswärme und zum anderen eine Wärmekonvektion unterbunden oder zumindest geschwächt werden.

Das Distanzglied als solches kann wenigstens abschnittsweise aus einem Material gebildet sein, das einen Wärmewiderstand aufweist, der höher ist als der Wärmewiderstand von hochlegiertem Stahl. Auch hierdurch kann ein Wärmefluss durch das Distanzglied als solches möglichst gering gehalten werden. Der Wärmewiderstand ist dabei der Kehrwert der Wärmeleitfähigkeit *λ*. Die Wärmeleitfähigkeit *λ* von hochlegiertem Stahl ist im Bereich von 15 W/mK. Das Distanzglied kann beispielsweise auch aus einem Kunststoff oder aus einem kunststoffähnlichen Material oder aus einer Keramik sein, und dabei einen Wärmewiderstand von 1/(0,02 W/mK) bis 1/(0,6 W/mK) aufweisen. Das Distanzglied kann dabei einstückig aus ein und demselben Material sein. Denkbar ist auch, dass das Distanzglied verschiedene Materialabschnitte aufweist, um zum einen Wärmeleitfähigkeit zu verhindern und zum anderen dennoch ausreichend stabil zu sein.

Die Bewegungskopplung des Distanzglieds mit dem Treibkörper kann dabei derart sein, dass das Distanzglied vom Antrieb um seine Längsachse verdreht oder entlang seiner Längsachse linear bewegt wird. Bei einer Ausbildung des Spannmoduls entsprechend der DE 10 2010 010 898 A1, bei der der Treibkörper als Treibring ausgebildet ist, wird folglich das Distanzglied zum Antreiben des Treibrings um seine Längsachse verdreht. Das Distanzglied ist dann als Drehstange ausgebildet. Bei einer Ausbildung entsprechend der EP 1 707 307 A1, bei der der Treibkörper als in axialer Richtung beweglicher Kolben bzw. als daran angeordnetes Stellglied ausgebildet ist, wird das Distanzglied entlang seiner Längsachse linear in axialer Richtung bewegt. Das Distanzglied ist dann als Zugstange ausgebildet.

Die eingangs genannte Aufgabe wird auch gelöst durch ein erfindungsgemäßes Spannmodul, das vorsieht, dass ein Dichtelement zur Abdichtung des jeweiligen Verriegelungskörpers gegenüber einer am Grundkörper vorgesehenen Führung vorgesehen ist. Das Dichtelement kann dabei so ausgebildet sein, dass es verhindert, dass heiße Medien oder heiße Luft in den Grundkörper einbringen können. Das Dichtelement ist vorzugsweise aus einem temperaturbeständigen und isolierenden Material.

Zur Befestigung des Dichtelements ist es vorteilhaft, wenn das Dichtelement von einer den Verriegelungskörper umgebenden oder die Führung bildenden Hülse am jeweiligen Verriegelungskörper oder in der jeweiligen Führung gehalten wird. Die Ausbildung kann dabei derart sein, dass zunächst das Dichtelement auf den Verrieglungskörper aufgeschoben oder in die Führung eingeschoben wird, bis es eine definierte Position erreicht. Dazu kann am Verriegelungskörper oder die Führung eine Schulter oder ein Anschlag vorgesehen sein. In einem nächsten Schritt kann dann die Hülse auf den Verrieglungskörper oder in die Führung zur Fixierung des Dichtelements auf- bzw. eingeschoben werden.

Das Dichtelement ist dabei vorteilhafterweise so angeordnet dass es geringfügig über die Oberfläche der Hülse hinausragt, so das eine geeignete Dichtwirkung entsteht.

Besonders vorteilhaft ist, wenn das Dichtelement aus einem nicht-elastischen Material ist, wie beispielsweise aus Sündermaterial, aus einem Kunststoff oder aus einer Keramik. Derartige Dichtelemente können besonders hitzeresistent ausgeführt werden.

Weitere Einzelheiten und vorteilhafte Ausgestaltungen der Erfindung sind der nachfolgenden Beschreibung zu entnehmen, anhand derer zwei Ausführungsbeispiele der Erfindung näher beschrieben und erläutert sind.

Es zeigen:
- Figur 1: eine erste Ausführungsform eines erfindungsgemäßen Spannmoduls;
- Figur 2 bis 5: verschiedene Längsschnitte durch das Spannmodul gemäß Figur 1;
- Figur 6: ein zweites erfindungsgemäßes Spannmodul;
- Figur 7 bis 9: verschiedene Längsschnitte durch das Spannmodul gemäß Figur 6,
- Figur 10: ein mehrteiliges Verriegelungselement in Einzelteilen und zusammengebaut in Seitenansicht; und
- Figur 11: das Verriegelungselement gemäß Figur 10 Einzelteilen und zusammengebaut in isometrischer Ansicht.

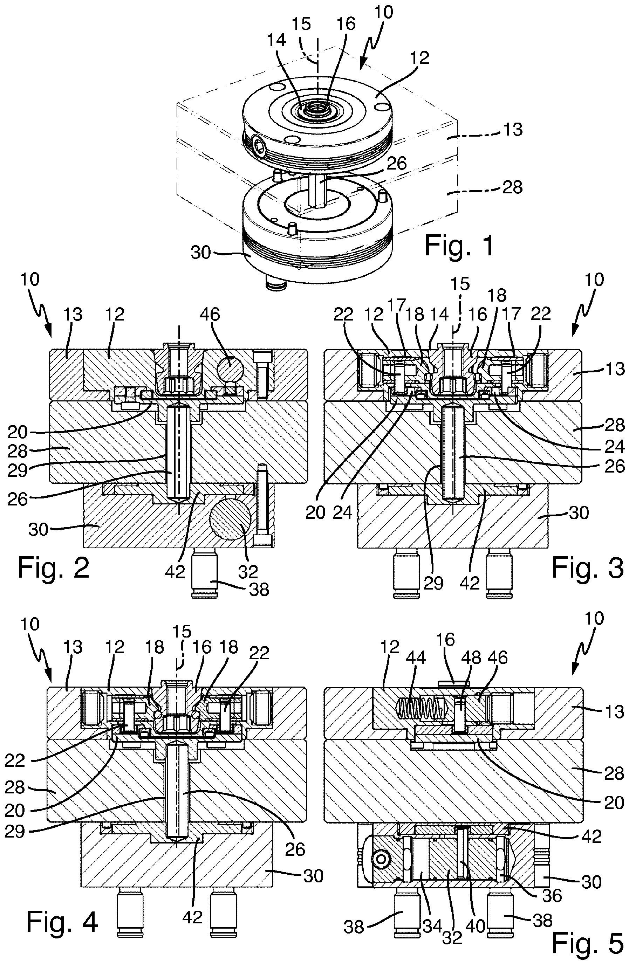

In den Figuren 1 bis 5 ist ein Spannmodul 10 gezeigt, das einen Grundkörper 12 mit einer Spannaufnahme 14 aufweist.

In den Figuren ist in der Spannaufnahme 14 ein Spannelement 16 in Form eines Spannbolzens angeordnet. Die Mittelachse der Spannaufnahme 14 ist mit dem Bezugszeichen 15 gekennzeichnet. Wie aus den Figuren deutlich wird, kann der Grundkörper 12 in einen Tisch 13 bündig eingelassen sein.

Im Betrieb ist das Spannelement 16 an einem Werkstückträger angeordnet, wobei der Werkstückträger mit dem Spannelement 16 dann am Spannmodul wiederholbar positionsgenau gespannt werden kann. Im Grundkörper 12 sind ferner, wie insbesondere aus den Schnitten gemäß Figur 3 und 4 hervorgeht, Verriegelungskörper 18 in Form von Spannschiebern vorgesehen. Die Verrieglungskörper 18 sind dabei in am Grundkörper 12 vorgesehenen Führungen 17 geführt. In der Figur 3 befinden sich die Spannschieber in einer radial äußeren Position, in der das Spannelement 16 in die Spannaufnahme 14 eingeführt oder herausgeführt werden kann. In der Figur 4 befinden sich die Verriegelungskörper 18 in ihrer radial inneren Lage, in der das Spannelement 16 in dem Spannmodul 10, bzw. in dessen Grundkörper 12, verriegelt ist. Zur synchronen Verlagerung der Verriegelungskörper 18 ist im Grundkörper 12 ein ringartig ausgebildeter Treibkörper 20 vorgesehen.

An den Verriegelungskörpern 18 sind, wie aus den Figuren 3 und 4 deutlich wird, parallel zur Mittelsachse 15 verlaufende Kulissenbolzen 22 angeordnet. Diese Kulissenbolzen 22 wirken mit im Treibkörper 20 vorgesehenen Kulissennuten 24 derart zusammen, dass bei einer Verdrehung des Treibkörpers 20 um die Mittelachse 15 die Verriegelungskörper 18, je nach Drehrichtung des Treibkörpers 20, in radialer Richtung hin zur Mittellängsachse 15 oder in radialer Richtung weg von der Mittellängsachse 15 bewegt werden.

Am Treibkörper 20 ist auf der der Spannaufnahme 14 abgewandten Seite ein entlang der Mittelachse 15 verlaufendes Distanzglied 26 vorgesehen. Das Distanzglied 26 durchgreift dabei einen Isolationskörper 28, wobei der Isolationskörper 28 hierbei eine Durchführung bzw. eine Bohrung 29 aufweist. Auf der dem Grundkörper 12 abgewandten Seite des Isolationskörpers 28 ist ein Antrieb 30 zum Antreiben des Distanzglieds 26 vorgesehen.

Der Isolationskörper 28 dient insbesondere zur thermischen Entkopplung des Antriebs 30 vom Grundgehäuse 12. Dabei kann das Distanzglied 26 insbesondere aus einem Material sein, das einen Wärmewiderstand aufweist, der dem von Kunststoff entspricht. Ferner ist denkbar, dass eine in den Figuren nicht gezeigte Abdichtung zwischen dem Isolationskörper 28 und dem Außenumfang des Distanzgliedes vorgesehen ist.

Der Grundkörper 12 und/oder der Antrieb 30 können dabei am Isolationskörper 28 befestigt sein. Der Isolationskörper 28 kann beispielsweise aus einem geeigneten Kunststoff, aus einer Keramik oder aus einem geeigneten Sintermaterial sein.

Der Antrieb 30 umfasst, wie aus Figur 5 deutlich wird, einen Kolben 32, der zwei Druckräume 34 und 36 begrenzt. Die Druckräume 34, 36 können über Anschlüsse 38 wechselnd mit Druckluft beaufschlagt werden. Am Kolben 32 ist ein Bolzen 40 vorgesehen, der mit einer Drehscheibe 42, die um die Mittelachse 15 verdrehbar ist, bewegungsgekoppelt. Die Bewegungskopplung ist dabei derart, dass aus einer axialen Bewegung des Kolbens 32 eine Drehbewegung der Drehscheibe 42 um die Mittelachse 15 erfolgt. Die Drehscheibe 42 ist wiederum mit dem dem Grundkörper 12 abgewandten freien Ende des Distanzglieds 26 drehfest verbunden. Wird folglich der Kolben 32 betätigt, so wird aufgrund der Bewegungskopplung des Kolbens 32 mit der Drehscheibe 42 die Drehscheibe 42 um die Mittelachse 15 verdreht, wodurch das Distanzglied 26 verdreht wird. Aufgrund der Verdrehung des Distanzglieds 26, das folglich als Drehstange ausgebildet ist, wird der Treibkörper 20 um die Mittelachse verdreht. Aufgrund der Bewegungskopplung des Treibkörpers 20 mit den Verriegelungskörpern 18 werden diese in radialer Richtung zum Verriegeln oder Entriegeln des Spannelements 16 betätigt.

Um bei Drucklosschaltung der Druckräume 34, 36 ein sicheres Spannen des Spannelements 16 in der Spannaufnahme 14 zu gewährleisten, ist im Grundkörper, wie aus Figur 5 deutlich wird, ein mit einer Druckfeder 44 druckbeaufschlagter Sicherungskolben 46 vorgesehen. Der Sicherungskolben 46 ist über einen Bolzen 48 mit dem Treibkörper 20 so bewegungsgekoppelt, dass die Druckfeder 44 den Treibkörper 20 zur Verriegelung der Verriegelungskörper 18 in die Verriegelungslage drängt.

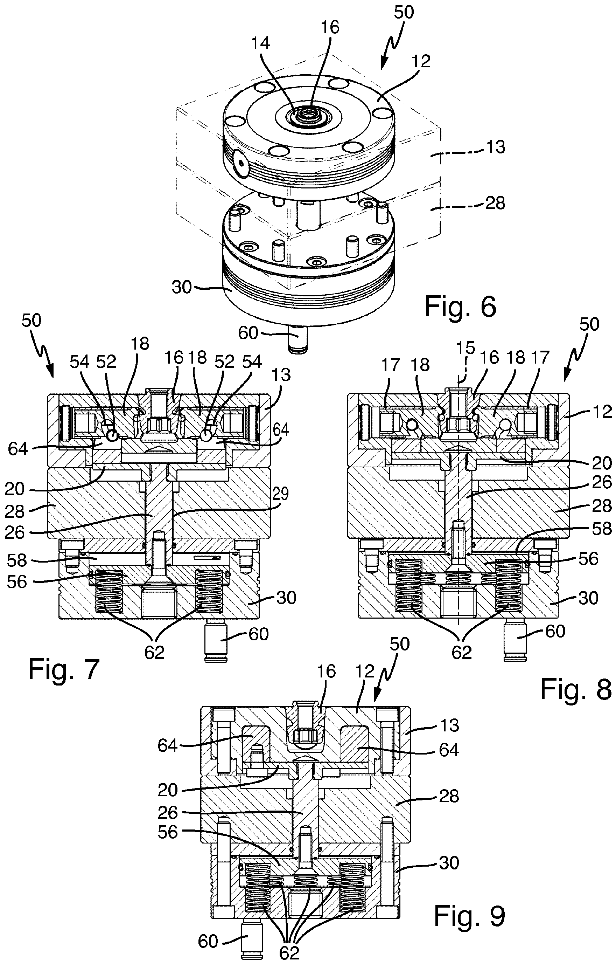

In den Figuren 6 bis 9 ist ein zweites erfindungsgemäßes Spannmodul 50 gezeigt. Dem Spannmodul 10 entsprechende Bauteile sind dabei mit entsprechenden Bezugszeichen gekennzeichnet.

Bei dem Spannmodul 50 gemäß den Figuren 6 bis 9 ist das Distanzglied 26 im Unterschied zum Spannmodul 10 gemäß den Figuren 1 bis 5 nicht als Drehstange, sondern als Zug- bzw. Druckstange ausgebildet. Die Bewegungskopplung der Verriegelungskörper 18 mit dem Treibkörper 20 erfolgt über am Treibkörper 20 vorgesehene Stellglieder in Form von Querbolzen 52, die in an den Verriegelungskörpern 18 vorgesehene Nuten 54 eingreifen. Wie insbesondere aus Figur 9 deutlich wird, sind auf der dem Antrieb 30 abgewandten Seite des Treibkörpers 20 Schenkel 64 vorgesehen, an denen die Querbolzen 52 befestigt sind. Die Schenkel 64 können dabei über Befestigungsschrauben an dem Treibkörper 20 befestigt sein.

Wird der Treibkörper 20 in axialer Richtung entlang der Längsachse 15 nach oben oder nach unten bewegt, so resultiert hieraus eine Bewegung der Verriegelungskörper 18 in radialer Richtung. In der Figur 7 ist das Spannmodul 50 im entriegelten Zustand gezeigt; in der Figur 8 ist das Spannmodul 50 im verriegelten Zustand gezeigt, bei dem die Verriegelungskörper 18 die radial innere Position einnehmen. Eine entsprechende Bewegungskopplung ist beispielsweise in der EP 1 707 307 A1 beschrieben.

Wie aus den Figuren 6 bis 9 deutlich wird, ist an der der Spannaufnahme 14 abgewandten Seite des in axialer Richtung verlagerbaren Treibkörpers 20 das Distanzglied 26 vorgesehen, das den Isolationskörper 28 durchgreift.

Anders als bei dem Spannmodul 10 weist beim Spannmodul 50 der Antrieb 30 einen Kolben 56 auf, der entlang der Mittelachse 15 verlagerbar ist. Der Kolben 56 begrenzt dabei einen mit Druckluft beaufschlagbaren Druckraum 58, der mit einem Anschluss 60 verbunden ist. Bei Druckluftbeaufschlagung des Druckraums 58 wird der Kolben 56 nach axial unten gegen die Federkraft von Druckfedern 62 gedrängt. Bei Drucklosschaltung des Druckraums 58 drängen die Druckfedern 62 den Kolben 56 nach axial oben, wodurch das Distanzglied 26 samt Treibköper 20 axial verlagert wird, wodurch, wie in Figur 8 gezeigt ist, die Verriegelungskörper 18 ihre Verriegelungslage einnehmen.

Bei den Spannmodulen 10 und 50 kann aufgrund der distalen Anordnung des Antriebs 30 vom jeweiligen Grundkörper 12 eine thermische Entkopplung von Grundkörper 12 und Antrieb 30 erzielt werden. Die Grundkörper 12 können folglich in einer Umgebung mit einer vergleichsweise hohen Temperatur, beispielsweise in einem Prozessraum einer additiven Fertigung betrieben werden, in dem mehrere hundert Grad Celsius herrschen können. Die temperatursensitiven Bauteile, nämlich die Antriebe mit Dichtungen und ggf. zugehörige Elektronikteile können außerhalb des Fertigungsraums und durch den Isolationskörper 28 thermisch geschützt in einem Raum oder Bereich betrieben werden, der eine geringere Temperatur aufweist, die zu keiner Schädigung des Antriebs oder dessen Komponenten führt.

Im Rahmen der Erfindung können anstelle der beschriebenen Antriebe auch andere Antriebe, insbesondere magnetische und/oder elektromotorische Antriebe oder auch manuelle Antriebe Verwendung finden, die mit einem Distanzglied mit den Verriegelungskörpern bewegungsgekoppelt sind.

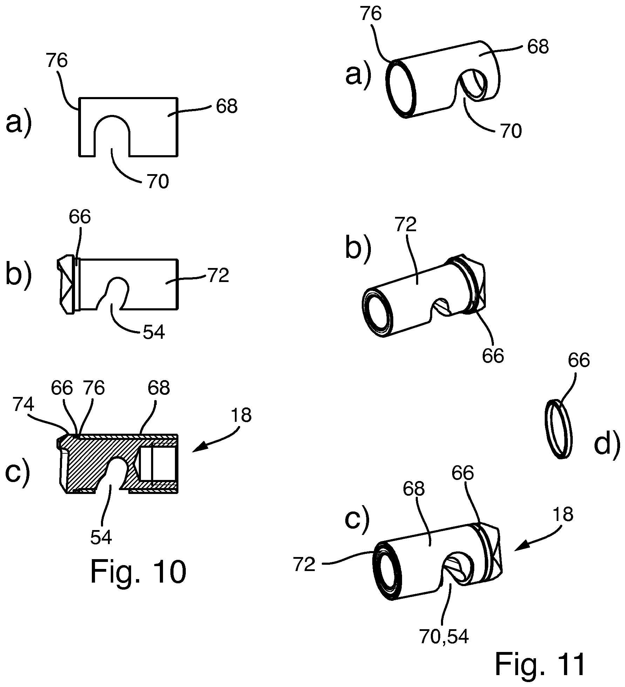

In den Figuren 10 und 11 ist ein Verriegelungskörper 18 als Einzelteil in verschiedenen Ansichten gezeigt. Wie aus den Figuren deutlich wird, sind die Verrieglungskörper 18 mehrteilig ausgebildet und umfassen ein Grundteil 72, ein Dichtelement 66 sowie eine das Dichtelement 66 fixierende Hülse 68. In der Figur 10 a) ist die Hülse 68 als Einzelteil dargestellt. Die Hülse 68 weist auf ihrer Unterseite eine Ausnehmung 70 auf in welcher sich im montierten Zustand die Nut 54 des jeweiligen Verrieglungskörpers 18 befindet. In der Figur 10 b) ist das Grundteil 72 des Verrieglungskörpers 18 mit dem Dichtelement 66 gezeigt, wobei zur Montage des Dichtelements 66 dieses auf das Grundteil 72 aufgeschoben wird. Figur 10 c) zeigt letztlich den fertig montierten Verrieglungskörper 18, bei dem das Dichtelement 66 mittels der Hülse 68 fixiert ist. Das Dichtelement 66 liegt dabei in axialer Richtung einerends an einer Schulter 74 des Grundteils 72 an und in axialer Richtung andererends an der freien Stirnseite 76 der Hülse 68 an.

Das Dichtelement 66 ist dabei vorzugsweise aus einem isolierenden, temperaturbeständigen und weiter vorzugsweise aus einem nicht elastischen Material, beispielsweise aus einem Sintermaterial, einem geeigneten Kunststoff oder einer Keramik. Auch die Hülse kann aus einem geeigneten temperaturbeständigen Material sein.

Die isometrischen Ansichten in den Figuren 11 a) bis c) entsprechend den Figuren 10 a) bis c). In der Figur 11 d) ist das ringsartig ausgebildete Dichtelement 66, das vorzugsweise nicht-elastisch ist, als Einzelteil gezeigt.

## Patentansprüche

1. Spannmodul (10, 50), insbesondere Nullpunktspannmodul, mit einem Grundkörper (12), mit einer im oder am Grundkörper (12) vorgesehenen Spannaufnahme (14) zur Aufnahme eines Spannelements (16), mit im Grundkörper (12) hin zu einer Mittelachse (15), also in radialer Richtung verlagerbaren Verrieglungskörpern (18), die in einer Verriegelungslage gegen das Spannelement (16) derart wirken, dass das Spannelement (16) oder ein am Spannelement (16) anordenbares Trägerteil in axialer Richtung gegen den Grundkörper (12) beaufschlagt wird, mit einem Treibkörper (20) zum Betätigen der Verrieglungskörper (18) und mit einem vom Treibkörper beabstandet angeordneten Antrieb (30) zum Antreiben des Treibkörpers (20), wobei der Antrieb (30) mit dem Treibkörper über ein Distanzglied bewegungsgekoppelt ist, **dadurch gekennzeichnet, dass** zwischen dem Antrieb (30) und dem Treibkörper (20) wenigstens ein Isolationskörper (28) zur thermischen Isolierung vorgesehen ist und dass das Distanzglied (26) den Isolationskörper (28) durchgreift.

2. Spannmodul (10, 50) nach Anspruch 1, **dadurch gekennzeichnet, dass** das Distanzglied (26) als Stange ausgebildet ist.

3. Spannmodul (10, 50) nach Anspruch 1 oder 2, **dadurch gekennzeichnet, dass** das Distanzglied (26) in der Mittelachse (15) verläuft.

4. Spannmodul (10, 50) nach Anspruch 1, 2 oder 3, **dadurch gekennzeichnet, dass** das Distanzglied (26) hin zum Isolationskörper, Treibkörper und/oder Antrieb angedichtet ist.

5. Spannmodul (10, 50) nach einem der vorhergehenden Ansprüche, **dadurch gekennzeichnet, dass** das Distanzglied (26) wenigstens abschnittsweise aus einem Material mit einem Wärmewiderstand ist, der höher ist als der Wärmewiderstand von hochlegiertem Stahl.

6. Spannmodul (10, 50) nach einem der vorhergehenden Ansprüche, **dadurch gekennzeichnet, dass** die Bewegungskopplung des Distanzglieds (26) mit dem Treibkörper (20) derart ist, dass das Distanzglied (26) vom Antrieb (30) um seine Mittelachse (15) verdreht oder entlang seiner Mittelachse (15) linear bewegt wird.

7. Spannmodul (10, 50) nach einem der vorhergehenden Ansprüche, **dadurch gekennzeichnet, dass** der Grundkörper (12) und/oder der Antrieb (30) am Isolationskörper (28) befestigt ist.

8. Spannmodul (10, 50) nach einem der vorhergehenden Ansprüche, **dadurch gekennzeichnet, dass** ein Dichtelement (66) zur Abdichtung des jeweiligen Verriegelungskörpers (18) gegenüber einer am Grundkörper (12) vorgesehenen Führung (17) vorgesehen ist.

9. Spannmodul (10, 50) nach Anspruch 8, **dadurch gekennzeichnet, dass** das Dichtelement (66) von einer den Verriegelungskörper (18) umgebenden oder die Führung (17) bildenden Hülse (68) am jeweiligen Verriegelungskörper (18) oder in der jeweiligen Führung gehalten wird.

10. Spannmodul (10, 50) nach Anspruch 8 oder 9, **dadurch gekennzeichnet, dass** das Dichtelement (66) aus einem nicht-elastischen Material ist.

## Claims

1. A clamping module (10, 50), in particular a zero-point clamping module, comprising a main body (12), comprising a clamp receptacle (14) provided in or on the main body (12) and intended for receiving a clamping element (16), comprising locking bodies (18) which can be moved in the main body (12) towards a central axis (15), i.e. in the radial direction (18), and which, in a locking position, act against the clamping element (16) such that the clamping element (16) or a carrier part that can be arranged on the clamping element (16) is urged in the axial direction against the main body (12), comprising a driving body (20) for actuating the locking bodies (18), and comprising a drive (30) arranged spaced apart from the driving body and intended for driving the driving body (20), the drive (30) being movement-coupled to the driving body via a distance member,
**characterized in that** at least one insulation body (28) for thermal insulation is provided between the drive (30) and the driving body (20), and **in that** the distance member (26) passes through the insulation body (28).

2. The clamping module (10, 50) according to claim 1, **characterized in that** the distance member (26) is designed as a rod.

3. The clamping module (10, 50) according to claim 1 or claim 2,
**characterized in that** the distance member (26) extends in the central axis (15).

4. The clamping module (10, 50) according to claim 1, claim 2 or claim 3,
**characterized in that** the distance member (26) is sealed to the insulation body, the driving body and/or the drive.

5. The clamping module (10, 50) according to any of the preceding claims, **characterized in that** the distance member (26) is made, at least in portions, of a material having a thermal resistance that is higher than the thermal resistance of high-alloy steel.

6. The clamping module (10, 50) according to any of the preceding claims, **characterized in that** the movement coupling of the distance member (26) to the driving body (20) is such that the distance member (26) is rotated about its central axis (15) or moved linearly along its central axis (15) by the drive (30).

7. The clamping module (10, 50) according to any of the preceding claims, **characterized in that** the main body (12) and/or the drive (30) is fastened to the insulation body (28).

8. The clamping module (10, 50) according to any of the preceding claims, **characterized in that** a sealing element (66) is provided for sealing the relevant locking body (18) with respect to a guide (17) provided on the main body (12).

9. The clamping module (10, 50) according to claim 8, **characterized in that** the sealing element (66) is held on the relevant locking body (18) or in the relevant guide by a sleeve (68) that surrounds the locking body (18) or forms the guide (17).

10. The clamping module (10, 50) according to claim 8 or claim 9,
**characterized in that** the sealing element (66) is made of a non-elastic material.

## Revendications

1. Module de serrage (10, 50), en particulier module de serrage au point zéro, avec un corps de base (12), avec un logement de serrage (14) prévu dans ou sur le corps de base (12) pour le logement d'un élément de serrage (16), avec des corps de verrouillage (18) déplaçables dans le corps de base (12) en direction d'un axe médian (15), par conséquent dans la direction radiale, qui agissent dans une position de verrouillage contre l'élément de serrage (16), de telle sorte que l'élément de serrage (16) ou une partie de support pouvant être disposée sur l'élément de serrage (16) est sollicité(e) dans la direction axiale contre le corps de base (12), avec un corps propulseur (20) pour l'actionnement des corps de verrouillage (18) et avec un entraînement (30) disposé de manière espacée du corps propulseur pour l'entraînement du corps propulseur (20), dans lequel l'entraînement (30) est accouplé en mouvement au corps propulseur par l'intermédiaire d'un élément d'écartement, **caractérisé en ce qu'**au moins un corps isolant (28) pour l'isolation thermique est prévu entre l'entraînement (30) et le corps propulseur (20) et que l'élément d'écartement (26) traverse le corps isolant (28) .

2. Module de serrage (10, 50) selon la revendication 1, **caractérisé en ce que** l'élément d'écartement (26) est réalisé sous la forme d'une tige.

3. Module de serrage (10, 50) selon la revendication 1 ou 2, **caractérisé en ce que** l'élément d'écartement (26) s'étend dans de l'axe médian (15).

4. Module de serrage (10, 50) selon la revendication 1, 2 ou 3, **caractérisé en ce que** l'élément d'écartement (26) est rendu étanche en direction du corps isolant, du corps propulseur et/ou de l'entraînement.

5. Module de serrage (10, 50) selon l'une quelconque des revendications précédentes, **caractérisé en ce que** l'élément d'écartement (26) est composé au moins sur certaines sections d'un matériau avec une résistance à la chaleur qui est supérieure à la résistance à la chaleur de l'acier fortement allié.

6. Module de serrage (10, 50) selon l'une quelconque des revendications précédentes, **caractérisé en ce que** l'accouplement en mouvement de l'élément d'écartement (26) au corps propulseur (20) est tel que l'élément d'écartement (26) est amené en rotation autour de son axe médian (15) ou déplacé linéairement le long de son axe médian (15) par l'entraînement (30).

7. Module de serrage (10, 50) selon l'une quelconque des revendications précédentes, **caractérisé en ce que** le corps de base (12) et/ou l'entraînement (30) est fixé sur le corps isolant (28).

8. Module de serrage (10, 50) selon l'une quelconque des revendications précédentes, **caractérisé en ce qu'**un élément d'étanchéité (66) est prévu pour étanchéifier le corps de verrouillage (18) respectif par rapport à un guidage (17) prévu sur le corps de base (12).

9. Module de serrage (10, 50) selon la revendication 8, **caractérisé en ce que** l'élément d'étanchéité (66) est maintenu par un manchon (68) entourant le corps de verrouillage (18) ou formant le guidage (17) sur le corps de verrouillage (18) respectif ou dans le guidage respectif.

10. Module de serrage (10, 50) selon la revendication 8 ou 9, **caractérisé en ce que** l'élément d'étanchéité (66) est composé d'un matériau non élastique.
